# EUROPÄISCHE PATENTSCHRIFT

(11) **EP 2 350 502 B1**
(45) Veröffentlichungstag und Bekanntmachung des Hinweises auf die Patenterteilung: **06.07.2016**
(21) Anmeldenummer: 09765007.1
(22) Anmeldetag: 12.10.2009
(51) Int. Cl.: F16J 9/12, B23K 26/00

(54) **VERFAHREN ZUM HERSTELLEN EINES KOLBENRINGS FÜR EINE BRENNKRAFTMASCHINE**
METHOD FOR MANUFACTURING A PISTON RING FOR AN INTERNAL COMBUSTION ENGINE
METHODE DE FABRICATION D'UN SEGMENT DE PISTON POUR UN MOTEUR À COMBUSTION INTERNE

(30) Priorität: 15.11.2008 DE 102008057514
(43) Veröffentlichungstag der Anmeldung: 03.08.2011
(73) Patentinhaber: Federal-Mogul Burscheid GmbH, 51399 Burscheid (DE)
(72) Erfinder: SEILER, Hans-Günter, 51469 Bergisch Gladbach (DE); MELZER, Rainer Ulrich, 51373 Leverkusen (DE)
(74) Vertreter: Becker Kurig Straus
(86) Internationale Anmeldenummer: PCT/DE2009/001419
(87) Internationale Veröffentlichungsnummer: WO 2010/054612

(56) Entgegenhaltungen:
- EP-A- 1 215 233
- DE-A1- 10 228 743
- DE-A1- 19 820 789
- DE-C1- 10 121 887
- DE-U1-202005 010 612
- DE-U1-202007 002 756

## Beschreibung

Die Erfindung betrifft ein Herstellungsverfahren für einen Kolbenring für eine Brennkraftmaschine gemäß gattungsbildenem Teil des ersten Patentanspruchs und einen durch da Verfahren hergestellten Kolbenring.

Der DE 20 2007 002 756 U1 ist ein Kolbenring für eine Verbrennungskraftmaschine zu entnehmen, beinhaltend eine Lauffläche, eine obere und eine untere Flankenfläche sowie eine innere Umfangsfläche, wobei zumindest eine dieser Flächen mit einer nach Art einer Matrix aufgebauten Markierung versehen ist.

Die DE 20 2005 010 612 U1 offenbart ein Bauteil, insbesondere einen Kolbenring für eine Brennkraftmaschine, mit einer Beschriftung zur Identifikation des Bauteils. Die Beschriftung ist auf einem gering beanspruchten und damit einem geringen Verschleiß ausgesetzten Oberflächenabschnitt des Bauteils aufgebracht. Die Beschriftung umfasst neben einem Text auch einen Barcode, der bedarfsweise in verschlüsselter Form vorgesehen ist.

Die auf den Kolbenringen bisher aufgebrachten Markierungen, insbesondere Data-Matrix-Codes (DMC) sind unmittelbar auf nicht bearbeiteten Flächenbereichen aufgebracht, so dass vielfach das Auslesen der Markierungen, insbesondere der Data-Matrix-Codes erschwert ist.

Der Erfindung liegt die Aufgabe zugrunde, eine Verbesserung der Lesbarkeit von Markierungen, insbesondere Data-Matrix-Codes, auf Kolbenringen herbeizuführen.

Diese Aufgabe wird durch das Verfahren des Anspruchs 1 gelöst. Bevorzugte Ausführungen des Verfahrens sind in den abhängigen Ansprüchen beschrieben. Diese Aufgabe wird durch ebenfalls durch einen mit dem Verfahren hergestellten Kolbenring nach Anspruch 5 gelöst.

Gegenüber dem Stand der Technik kann durch Laserglätten der jeweiligen mit der Matrix zu versehenen Kolbenringfläche ein gegenüber dem Restflächenbereich erhellter Bereich erzeugt werden, so dass die auf diesen erhellten Bereich aufgebrachte Markierung, insbesondere ein Data-Matrix-Code, zur Verbesserung der Auslesequalität der Matrix beiträgt.

Die Hintergrundfläche wird mittels Laser hergestellt und zwar bevor der eigentliche Code ebenfalls mittels Laser aufgebracht wird. Diese Hintergrundfläche kann beispielsweise durch parallele Linien aufgebracht werden. Soll das Hintergrundbild eine rechteckige Querschnittsform haben, können die Linien beispielsweise diagonal aufgebracht werden. Andersartige Texturen sind jedoch ebenfalls denkbar (horizontal oder vertikal parallele Linien, Kreuzstruktur oder dergleichen).

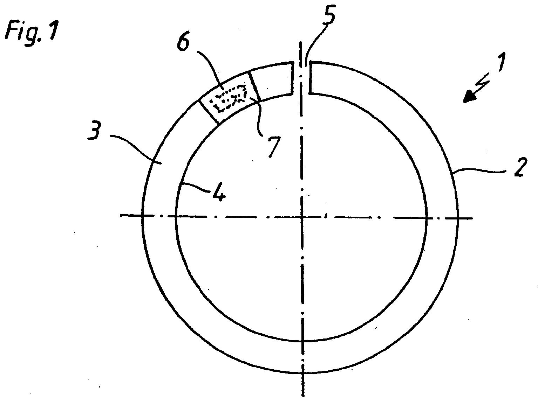

Der Erfindungsgegenstand ist anhand eines Ausführungsbeispiels in der Zeichnung dargestellt und wird wie folgt beschrieben:

Die einzige Figur zeigt einen Kolbenring 1, beinhaltend eine Lauffläche 2, eine in dieser Darstellung erkennbare obere Flankenfläche 3 sowie eine innere Umfangsfläche 4. Ferner erkennbar ist der Stoß 5 des Kolbenringes 1. Auf der oberen Flankenfläche 3 befindet sich eine nur schematisch angedeutete Markierung 6, die in diesem Beispiel im Bereich des Stoßes 5 auf der oberen Flankenfläche 3 aufgebracht ist. Die Markierung 6 ist als maschinenlesbarer Data-Matrix-Code ausgebildet. Der die Markierung 6 beinhaltende Flächenbereich 7 wurde vor Aufbringung der Markierung 6 einer Laserbearbeitung unterzogen, so dass eine Hintergrundfläche gebildet wird, die gegenüber den angrenzenden Flächenbereichen des Kolbenringes1, heller ausgebildet ist. Nach Aufbringen der Markierung 6 ist selbige dann besser optisch erkennbar und kann einfacher ausgelesen werden.

## Patentansprüche

1. Verfahren zum Herstellen eines Kolbenrings für eine Brennkraftmaschine, beinhaltend Bereitstellen eines Kolbenrings mit einer Lauffläche (2), einer oberen (3) und einer unteren Flankenfläche sowie einer inneren Umfangsfläche (4), weiter umfassend Erzeugen einer Hintergrundfläche für eine Matrix (6) durch Laserglättung, die heller ausgebildet ist als zumindest außerhalb der Matrix (6) unmittelbar daran angrenzende Flächenbereiche des Kolbenringes (1) und
Versehen zumindest eine dieser Flächen (2-4) mit mindestens einer nach Art der Matrix ausgebildeten Markierung (6).

2. Verfahren nach Anspruch 1, **dadurch gekennzeichnet, dass** die Hintergrundfläche (7) mit parallel zueinander verlaufenden Linien gebildet wird.

3. Verfahren nach einem der Ansprüche 1 oder 2, **dadurch gekennzeichnet, dass** die Linien bei einer etwa rechteckig ausgebildeten Hintergrundfläche (7) diagonal verlaufen.

4. Verfahren nach einem der Ansprüche 1 bis 3, **dadurch gekennzeichnet, dass** die Markierung (6) als Data-Matrix-Code ausgebildet wird und mittels Laser auf die Hintergrundfläche (7) aufgebracht wird.

5. Kolbenring, hergestellt mit einem Verfahren nach einem der Ansprüche 1 bis 4.

## Claims

1. Method for producing a piston ring for a combustion engine including providing a piston ring with a running surface (2), an upper (3) and a lower flank surface as well as an inner circumferential surface (4), further comprising creating a background surface for a matrix (6) through laser smoothing which is designed brighter than at least outside the matrix (6) immediately adjoining surface regions of the piston ring (1), and providing at least one of these surfaces (2-4) with at least one marking (6) designed in the type of the matrix.

2. Method according to claim 1, **characterized in that** the background surface (7) is formed with lines running parallel to one another.

3. Method according to one of claims 1 or 2, **characterized in that** the lines with an approximately rectangularly designed background surface (7) run diagonally.

4. Method according to one of claims 1 to 3, **characterized in that** the marking (6) is designed as data matrix code and is applied to the background surface (7) by means of laser.

5. Piston ring, produced with the method according to one of the claims 1 to 4.

## Revendications

1. Procédé de fabrication d'un segment de piston pour un moteur à combustion interne, comprenant de fournir un segment de piston avec une surface de roulement (2), une surface de flanc supérieur (3) et une surface de flanc inférieur ainsi qu'une surface de circonférence intérieure (4), comprenant en outre de produire une surface d'arrière-plan pour une matrice (6) par un message au laser, qui est plus claire qu'au moins une zone de surface du segment de piston (1) qui lui est directement contiguë à l'extérieur de la matrice (6) et pourvoir au moins une de ces surfaces (2-4) d'au moins un marquage (6) réalisé à la manière de la matrice.

2. Procédé selon la revendication 1, **caractérisé en ce que** la surface d'arrière-plan (7) est formée avec des lignes s'étendant parallèlement les unes aux autres.

3. Procédé selon une des revendications 1 ou 2, **caractérisé en ce que** les lignes s'étendent en diagonale en présence d'une surface d'arrière-plan (7) à la configuration approximativement rectangulaire.

4. Procédé selon une des revendications 1 à 3, **caractérisé en ce que** le marquage (6) est conçu comme un code de matrice de données et est appliqué au moyen d'un laser sur la surface d'arrière-plan (7).

5. Segment de piston, fabriqué avec un procédé selon une des revendications 1 à 4.
